(19) Europäisches Patentamt
European Patent Office
Office européen des brevets

(11) Veröffentlichungsnummer: **0 533 988 B1**

(12) **EUROPÄISCHE PATENTSCHRIFT**

(45) Veröffentlichungstag der Patentschrift: **26.07.95**

(51) Int. Cl.[6]: **C09K 19/02**, C09K 19/46, C09K 19/42, C09K 19/44

(21) Anmeldenummer: **91116565.2**

(22) Anmeldetag: **27.09.91**

(54) **Flüssigkristallanzeige.**

(43) Veröffentlichungstag der Anmeldung:
**31.03.93 Patentblatt 93/13**

(45) Bekanntmachung des Hinweises auf die Patenterteilung:
**26.07.95 Patentblatt 95/30**

(84) Benannte Vertragsstaaten:
**DE GB**

(56) Entgegenhaltungen:
**EP-A- 0 178 937**
**EP-A- 0 258 868**
**EP-A- 0 315 484**
**EP-A- 0 359 146**
**WO-A-86/03769**

**PATENT ABSTRACTS OF JAPAN vol. 10, no. 203 (C-360)16. Juli 1986**

(73) Patentinhaber: **MERCK PATENT GmbH**
**Postfach,**
**Frankfurter Strasse 250**
**D-64271 Darmstadt (DE)**

(72) Erfinder: **Plach, Herbert, Dr.**
**Wingertsbergstrasse 5**
**W-6100 Darmstadt (DE)**
Erfinder: **Weber, Georg**
**Wilhelm-Leuschner-Strasse 38**
**W-6106 Erzhausen (DE)**
Erfinder: **Reiffenrath, Volker**
**Jahnstrasse 15**
**W-6101 Rossdorf (DE)**
Erfinder: **Kompter, Michael, Dr.**
**Haydnstrasse 14**
**W-6086 Riedstadt-Erfelden (DE)**

**EP 0 533 988 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Flüssigkristallanzeige auf der Basis einer verdrillten nematischen Zelle.

Flüssige Kristalle werden vor allem als Dielektrika in Anzeigevorrichtungen verwendet, da die optischen Eigenschaften solcher Substanzen durch eine angelegte Spannung beinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben. Weiterhin sollten sie bei üblichen Betriebstemperaturen, d.h. in der Regel in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Bisher konnten flüssigkristalline Medien mit für die praktische Anwendung erforderlichen Werten für Doppelbrechung und Phasenbereich (z.B. Klärpunkt $\geqq$ 60 °) nur mit Schwellenspannungen von ca. 1,0 Volt hergestellt werden.

Es besteht somit immer noch ein großer Bedarf nach Flüssigkristallanzeigen mit einer optischen Anisotropie von mehr als 0,15 bei gleichzeitig großem Arbeitstemperaturbereich, kurzen Schaltzeiten und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:

- erweiterter nematischer Phasenbereich (insbesondere zu tiefen Temperaturen)
- Schaltbarkeit bei extrem tiefen Temperaturen (out-door-use, Automobil, Avionik)
- Erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Für Flüssigkristallanzeigen z.B. im Bereich von Informationsspeichern und Rechnern im Scheckkartenformat besteht Bedarf nach Flüssigkristallmischungen mit sehr geringen Schwellspannungen. Da solche Anzeigen auch bei niedrigen Umgebungstemperaturen noch akzeptable Schaltzeiten haben müssen, benötigt man Flüssigkristalle mit guter Viskosität und hoher Doppelbrechung.

Bislang war von der Flüssigkristall-Materialseite die Erreichung kleiner Viskositäten bei hohen Doppelbrechungswerten begrenzt und somit konnte der günstige Einfluß geringer Zelldicken auf die Schaltzeiten nicht voll ausgenutzt werden.

Nun wurde überraschend gefunden, daß in nematischen Mischungen die überwiegend aus stark dielektrisch positiven Substanzen und durch Zusatz von Cyanoterphenylen, vergleichsweise niedrigviskose Mischungen mit hohen Doppelbrechungen erhalten werden. Durch Zusatz von kleinen Mengen von neutralen Substanzen kann die Doppelbrechung bei optimaler Viskosität geändert werden.

Der Erfindung liegt die Aufgabe zugrunde, Medien insbesondere für derartige TN- oder STN-Anzeigen bereitzustellen, die die oben angegebenen Nachteile nicht oder nur in geringerem Maße, und gleichzeitig hohe Werte der optischen Anisotropie und niedrige Schwellenspannungen aufweisen.

Es wurde nun gefunden, daß diese Aufgabe gelöst werden kann, wenn man die erfindungsgemäßen Flüssigkristallanzeigen verwendet.

Gegenstand der Erfindung ist eine Flüssigkristallanzeige auf der Basis einer verdrillten nematischen Zelle, wobei die Schichtdicke des flüssigkristallinen Mediums 3-10 µm und die optische Anisotropie > 0,15 ist, und das flüssigkristalline Medium eine Komponente A bestehend aus einer oder mehreren Verbindungen mit einer dielektrischen Anisotropie von über +30, eine Komponente B bestehend aus einer oder mehreren Verbindungen mit einer optischen Anisotropie von mehr als 0,2, und eine Komponente C bestehend aus einer oder mehreren dielektrisch neutralen Komponenten enthält, dadurch gekennzeichnet, daß

a) Komponente A mindestens eine Verbindung ausgewählt aus der Formel $A^1$ enthält,

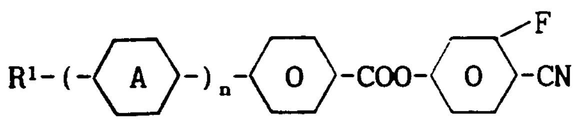

$A^1$

worin

$R^1$ Alkyl, Alkenyl, Alkoxy oder Oxaalkyl mit bis zu 8 C-Atomen,

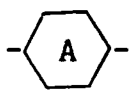 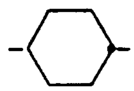, 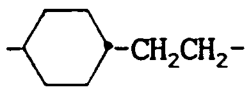 oder 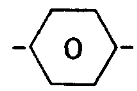,

und

n 0 oder 1

bedeuten,

b) Komponente B mindestens eine Verbindung der Formel $B^1$ enthält,

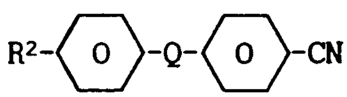

$B^1$

worin

$R^2$ Alkyl, Alkenyl, Alkoxy, Alkenyloxy oder Oxaalkyl mit bis zu 8 C-Atomen,

Q

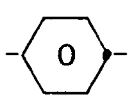, 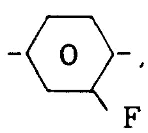, 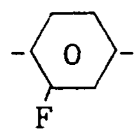, 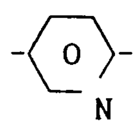,

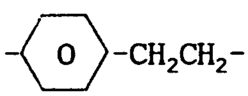 oder 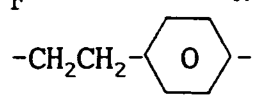,

und

m 0 oder 1

bedeuten, und

c) Komponente C mindestens eine Verbindung der Formel $C^1$ enthält,

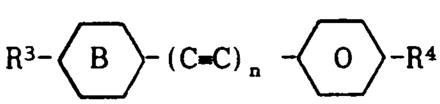

$C^1$

worin

$R^3$ und $R^4$ jeweils unabhängig voneinander Alkyl, Alkenyl, Alkoxy, Alkenyloxy oder Oxaalkyl mit bis zu 8 C-Atomen,

$R^4$ auch F

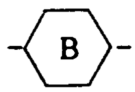 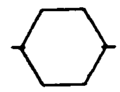 oder 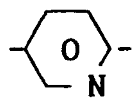, 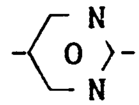 oder 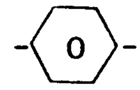.

und

n 0 oder 1

bedeuten;

insbesondere solche Flüssigkristallanzeigen, wobei die Komponente A 40-80 Gew.% mindestens einer Verbindung der Formel $A^1$ enthält.

Weiterhin Gegenstand der Erfindung sind Flüssigkristallanzeigen, wobei das flüssigkristalline Medium

a) 50-70 Gew.% der Komponente A,

b) 2-15 Gew.% der Komponente B und

c) 2-15 Gew.% der Komponente C

enthält,

insbesondere solche Flüssigkristallanzeigen, wobei das flüssigkristalline Medium 15-50 Gew.% mindestens einer weiteren nematischen oder nematogenen Komponente D enthält, wobei diese mindestens eine Verbindung der Formel $D^1$ enthält:

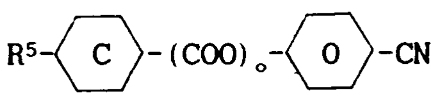 $D^1$

worin

$R^5$ Alkyl, Alkoxy, Alkenyl, Alkenyloxy oder Oxaalkyl mit bis zu 8 C-Atomen,

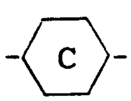 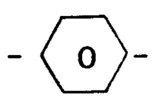, 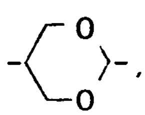, 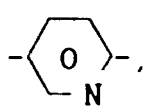, 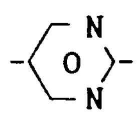 oder 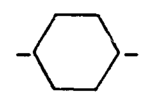,

und

o 0 oder 1

bedeuten.

Von diesen Flüssigkristallanzeigen sind diejenigen bevorzugt, worin die Komponente D mindestens eine Verbindung der Formel $D^2$ und mindestens eine Verbindung der Formel $D^3$ enthält:

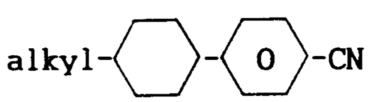 $D^2$

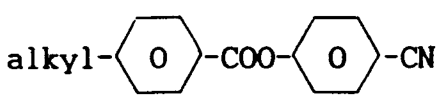 $D^3$

worin alkyl eine Alkylgruppe mit 1 bis 8 C-Atomen bedeutet.

Die erzielbaren Kombinationen aus Klärpunkt, Doppelbrechung, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, großer optischer Anisotropie sowie einem hohen Wert der dielektrischen Anisotropie konnte bislang nur unzureichend erfüllt werden. Systeme wie z.B. ZLI-4011 weisen zwar einen vergleichbaren Klärpunkt, ein ähnlich hohen Wert der optischen Anisotropie und vergleichbar günstige Viskositäten auf, besitzen jedoch einen relativ niedrigen Wert der dielektrischen

Anisotropie ($\Delta\epsilon$ < 30).

Andere Mischungs-Systeme besitzen vergleichbare Viskositäten und Werte von $\Delta\epsilon$ und $\Delta n$ weisen jedoch nur Klärpunkte unterhalb von 60 °C auf.

Die erfindungsgemäßen Flüssigkristallmischungen ermöglichen es bei hohen optischen Anisotropien > 0,15, vorzugsweise gleichzeitig dielektrische Anisotropiewerte ≧ 30,0, vorzugsweise ≧ 40,0, Klärpunkte oberhalb 60°, vorzugsweise oberhalb 65° zu erreichen, wodurch hervorragende TN- und STN-Anzeigen erzielt werden können.

Es versteht sich, daß durch geeignete Wahl der Komponenten der erfindungsgemäßen Flüssigkristallanzeigen auch höhere Klärpunkte (z.B. oberhalb 90°) bei höheren Schwellenspannung oder niedrigere Klärpunkte bei niedrigeren Schwellenspannungen unter Erhalt der anderen vorteilhaften Eigenschaften realisiert werden können. Die erfindungsgemäßen Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Der Fachmann kann durch geeignete Wahl der einzelnen Komponenten und deren Gewichtsanteilen mit einfachen Routinemethoden die für eine vorgegebene Schichtdicke der Anzeige erforderliche Doppelbrechung einstellen.

Der nematische Phasenbereich ist vorzugsweise mindestens 70°, insbesondere mindestens 80°, breit. Vorzugsweise erstreckt sich dieser Bereich mindestens von -20° bis +70°.

Die erzielten Schwellenspannungen $V_{10/0/20}$ sind im allgemeinen ≦ 1,20 Volt und vorzugsweise im Bereich 0,5 bis 1,20 Volt, insbesondere 0,6 bis 0,8 Volt.

Die erfindungsgemäßen Medien zeichnen sich neben ungewöhnlich weitem nematischen Phasenbereich auch durch außerordentlich hohe elastische Konstanten bei sehr günstigen Viskositätswerten aus, wodurch insbesondere bei Verwendung in STN-Anzeigen deutlich Vorteile gegenüber Medien aus dem Stand der Technik resultieren.

Vorzugsweise basieren die erfindungsgemäßen Medien auf mehreren Verbindungen der Formel $A^1$, [vorzugsweise zwei oder mehr, insbesondere 3 bis 8, wobei vorzugsweise 2 bis 4 der Verbindungen der Formel $A^1$ 2 Ringe aufweisen (n = 0) und 1 bis 4 Verbindungen der Formel $A^1$ 3 Ringe aufweisen (n = 1)].

Der Anteil dieser Verbindungen ist ≧ 25 %, vorzugsweise ≧ 40 %, insbesondere 40-70 %, wobei der Anteil der Verbindungen $A^1$ mit 2 Ringen (n = 0) vorzugsweise 20-50 % beträgt und der Anteil derer mit 3 Ringen (n = 1) vorzugsweise 0-30 % beträgt.

Die einzelnen Verbindungen der Formeln $A^1$, $B^1$, $C^1$, $D^1$, $D^2$ und $D^3$ und deren Unterformeln, die in den erfindungsgemäßen Anzeigen verwendet werden können, sind entweder bekannt, oder sie können analog zu den bekannten Verbindungen hergestellt werden.

Bevorzugte Ausführungsformen sind im folgenden angegeben:

Die Verbindungen der Formel $A^1$ umfassen die bevorzugten Verbindungen der Formeln $A^{1a}$ bis $A^{1f}$

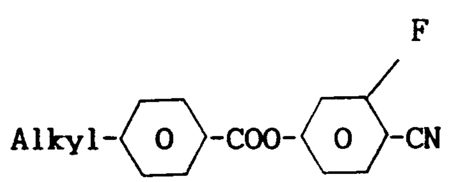

$A^{1a}$

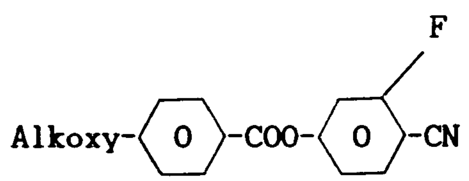

$A^{1b}$

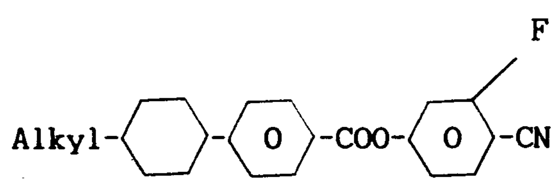

$A^{1c}$

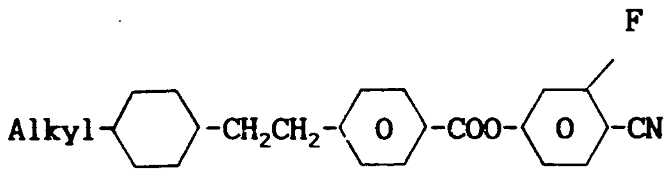

$A^{1d}$

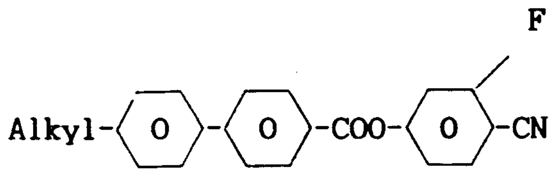

$A^{1e}$

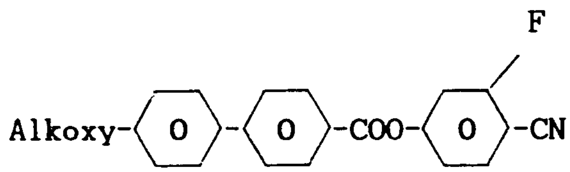

$A^{1f}$

davon sind die Verbindungen der Formeln $A^{1a}$, $A^{1b}$ und $A^{1c}$ besonders bevorzugt.

Die Verbindungen der Formeln $B^1$ umfassen die bevorzugten Verbindungen der Formeln $B^{1a}$ bis $B^{1f}$

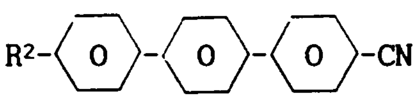

$B^{1a}$

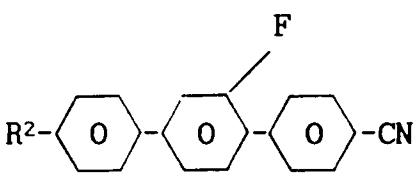

$B^{1b}$

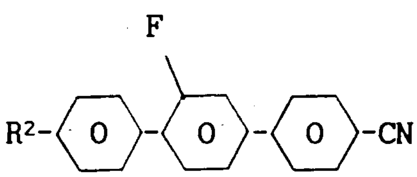

$B^{1c}$

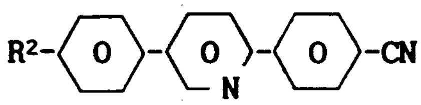

$B^{1d}$

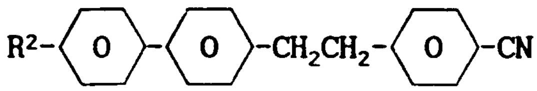

$B^{1e}$

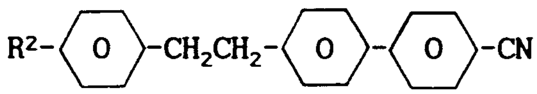

$B^{1f}$

Darunter sind die Verbindungen der Formel $B^{1a}$, $B^{1b}$, $B^{1c}$, $B^{1e}$ und $B^{1f}$ jeweils bevorzugt.

Die Verbindungen der Formel $C^1$ umfassen die bevorzugten Verbindungen der Formeln $C^{1a}$ bis $C^{1g}$

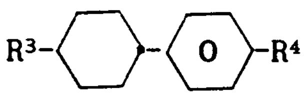

$C^{1a}$

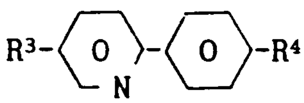

$C^{1b}$

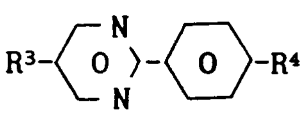

$C^{1c}$

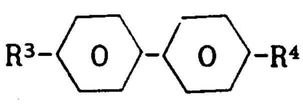

$C^{1d}$

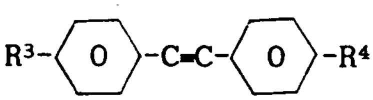

$C^{1e}$

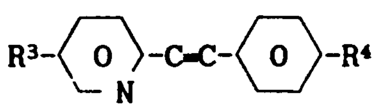

$C^{1f}$

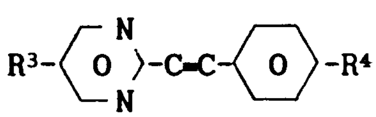

$C^{1g}$

Darunter sind die Verbindungen der Formeln $C^{1a}$, $C^{1d}$ und $C^{1e}$ besonders bevorzugt.

Zur Erhöhung des Klärpunkts kann den flüssigkristallinen Medien zusätzlich eine Komponente E bestehend aus einer oder mehreren Verbindungen mit einem Klärpunkt von über 200 °C zugesetzt werden. Die Komponente E enthält vorzugsweise Verbindungen der Formel $E^1$,

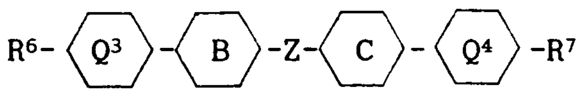

$E^1$

worin

$Q^3$ und $Q^4$ jeweils trans-1,4-Cyclohexylen oder

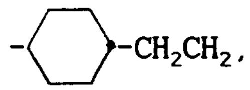

$R^6$ und $R^7$ jeweils unabhängig voneinander Alkyl, Alkenyl, Alkenyloxy oder Oxaalkyl mit bis zu 8 C-Atomen,

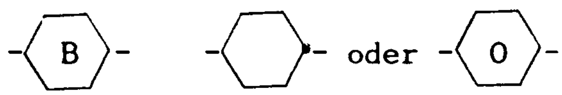

oder

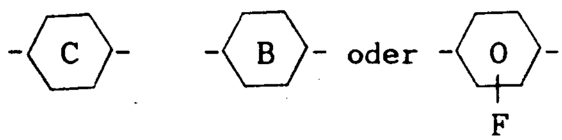

oder

und

Z -$CH_2CH_2$, -COO-, -OCO

oder eine Einfachbindung bedeuten.

Die Verbindungen der Formeln $E^1$ umfassen die bevorzugten Verbindungen der Formeln $E^{1a}$ bis $E^{1g}$

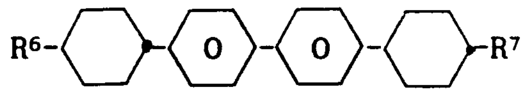

$E^{1a}$

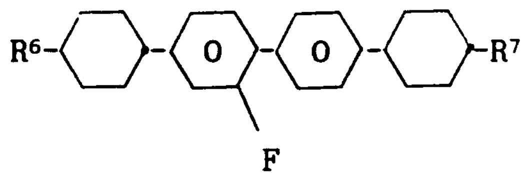

$E^{1b}$

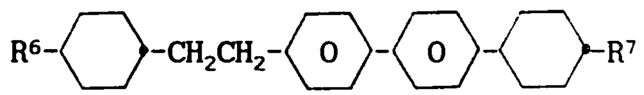

$E^{1c}$

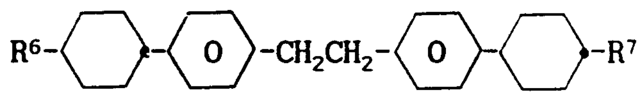

$E^{1d}$

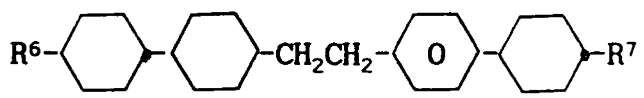

$E^{1e}$

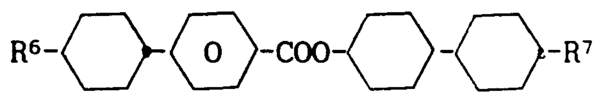

$E^{1f}$

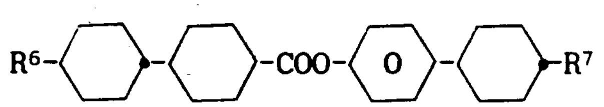

$E^{1g}$

Darunter sind diejenigen der Formeln $E^{1a}$, $E^{1b}$, $E^{1c}$ und $E^{1g}$ bevorzugt, insbesondere diejenigen, worin $R^4$ und $R^5$ jeweils unabhängig voneinander n-Alkyl mit 2 bis 8 C-Atomen bedeutet.

Die erfindungsgemäßen Anzeigen enthalten vorzugsweise 1 bis 5 Verbindungen der Formeln $A^{1a}$ und/oder $A^{1b}$ und/oder 1 bis 4 Verbindungen der Formeln $A^{1c}$.

Der Gesamtanteil dieser bevorzugten Verbindungen $A^{1a}$, $A^{1b}$ und $A^{1c}$ an den flüssigkristallinen Anzeigen beträgt in der Regel 30 bis 80 Gew.%.

Daneben enthalten die erfindungsgemäßen Anzeigen vorzugsweise 1 bis 3 der bevorzugten Verbindungen der Formeln $B^{1a}$, $B^{1b}$ und/oder $B^{1c}$ und/oder 1 bis 3 der bevorzugten Verbindungen der Formeln $B^{1e}$ und/oder $B^{1f}$.

Weiterhin enthalten die erfindungesgemäßen Anzeigen vorzugsweise 1 bis 3 der bevorzugten Verbindungen der Formeln $C^{1e}$ und/oder 1 bis 3 Verbindungen der Formeln $C^{1a}$ und/oder $C^{1d}$.

Besonders bevorzugt sind erfindungsgemäße Anzeigen mit einem Anteil der bevorzugten Verbindungen der Formel $C^{1e}$ von 2-15 Gew.% und/oder der bevorzugten Verbindungen der Formel $C^{1a}$ und/oder $C^{1d}$ von 2 bis 15 Gew.%.

Neben den genannten Verbindungen der Formel $A^1$, $B^1$ und $C^1$ können die erfindungsgemäßen Anzeigen auch eine weitere nematische oder nematogene Komponente D enthalten.

In der Regel werden weniger als 55 %, insbesondere 10-40 % dieser Komponente D verwendet.

Die Verbindungen der Formel $D^1$ umfassen die bevorzugten Verbindungen der Formeln $D^{1a}$ bis $D^{1h}$

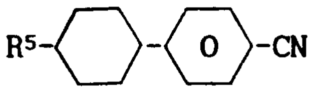

$D^{1a}$

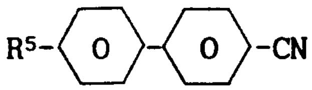

$D^{1b}$

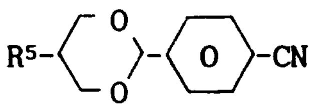

$D^{1c}$

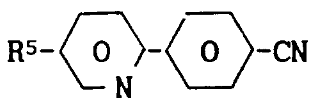

$D^{1d}$

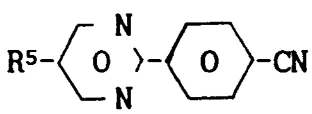

$D^{1e}$

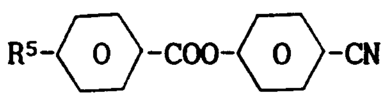

$D^{1f}$

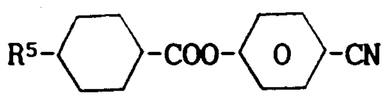

$D^{1g}$

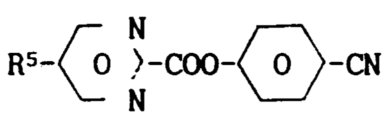

$D^{1h}$

davon sind die Verbindungen der Formeln $D^{1a}$ und $D^{1f}$, worin $R^5$ Alkyl mit 1 bis 5 C-Atomen besonders bevorzugt.

Die flüssigkristallinen Medien der erfindungsgemäßen Anzeigen bestehen insbesondere aus

| | |
|---|---|
| 30-70 % | Komponente A |
| 1-15 % | Komponente B |
| 2-10 % | Komponente C und |
| 0-25 % | Komponente D |

bezogen auf 100 % der flüssigkristallinen Medien.

Die Komponente A besteht insbesondere bevorzugt aus:

| | |
|---|---|
| 50-85 % | Verbindungen der Formel $A^{1a}$, |
| 15-50 % | Verbindungen der Formel $A^{1c}$, |

bezogen auf 100 % der Komponente A.

Die Komponente B besteht insbesondere bevorzugt aus:

| | |
|---|---|
| 25-100 % | Verbindungen der Formel $B^{1a}$, |
| 0- 40 % | Verbindungen der Formel $B^{1e}$ oder $B^{1f}$, |

bezogen auf 100 % der Komponente B.

Die Komponente C besteht insbesondere bevorzugt aus:

| | |
|---|---|
| 0-100 % | Verbindungen der Formel $C^{1a}$, |
| 0- 40 % | Verbindungen der Formel $C^{1b}$ und |
| 0-100 % | Verbindungen der Formel $C^{1e}$. |

Es wurde gefunden, daß bereits ein relativ hoher Anteil an Verbindungen der Formel $A^1$ im Gemisch mit üblichen Flüssigkristallmaterialien, insbesondere jedoch mit einer oder mehreren Verbindungen der Formel $B^1$, $C^1$, $D^1$, $D^2$ und/oder $D^3$ zu einer beträchtlichen Verbesserung der Ansprechzeiten und zu niedrigen Schwellenspannungen führt, wobei gleichzeitig breite nematische Phasen mit tiefen Übergangstemperaturen smektisch-nematisch beobachtet werden. Die Verbindungen der Formeln $A^1$ bis $D^3$ sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl und $C_7$-6-Alkenyl, insbesondere $C_2$-$C_7$-1E-Alkenyl, $C_4$-$C_7$-3E-Alkenyl und $C_5$-$C_7$-4-Alkenyl.

Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Oxaalkyl" umfaßt vorzugsweise geradkettige Reste der Formel $C_nH_{2n+1}$-O-$(CH_2)_m$, worin n und m jeweils unabhängig voneinander 1 bis 6 oder m auch 0 bedeuten. Vorzugsweise ist n = 1 und m 1 bis 6.

Durch geeignete Wahl der Bedeutungen von $R^1$, $R^2$, $R^3$, $R^4$ und $R^5$ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten $k_{33}$ (bend) und $k_{11}$ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von $k_{33}/k_{11}$ im Vergleich zu Alkyl -und Alkoxyresten. Eine Gruppe

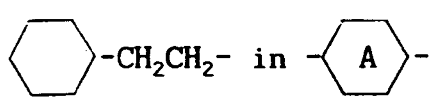

der Verbindungen der Formel $A^1$ führt im allgemeinen zu höheren Werte von $k_{33}/k_{11}$ im Vergleich zu einer einfachen Kovalenzbindung. Höhere Werte von $k_{33}/k_{11}$ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln $A^1$, $B^1$, $C^1$, $D^1$ und $D^2$ hängt weitgehend von den gewünschten Eigenschaften, von der Wahl der Komponenten der Formeln $A^1$, $B^1$, $C^1$, $D^1$ und $D^2$ und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln $A^1$ bis $D^3$ in den erfindungsgemäßen Anzeigen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln $A^1$ bis $D^1$ ist.

Der Aufbau der erfindungsgemäßen Anzeigen aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden. C bedeutet eine kristalline, S eine smektische, $S_B$ eine smektisch B, N eine nematische und I die isotrope Phase.

$V_{10,0,20}$ bezeichnet die Spannung für 10 % Transmission (Blickrichtung senkrecht zur Plattenoberfläche). $t_{on}$ bezeichnet die Einschaltzeit und $t_{off}$ die Ausschaltzeit bei einer Betriebsspannung entsprechend dem 2,5-fachen Wert von $V_{10,0,20}$ . $\Delta n$ bezeichnet die optische Anisotropie und $n_o$ den Brechungsindex. $\Delta\epsilon$ bezeichnet die dielektrische Anisotropie ($\Delta\epsilon = \epsilon_{\parallel} - \epsilon_{\perp}$, wobei $\epsilon_{\parallel}$ die Dielektrizitätskonstante parallel zu den Moleküllängsachsen und $\epsilon_{\perp}$ die Dielektrizitätskonstante senkrecht dazu bedeutet. Die elektrooptischen Daten wurden in einer TN-Zelle mit einer Doppelbrechung unterhalb des 1. Minimums (d.h. bei einem d . $\Delta n$-Wert von 0,4 $\mu$) bei 20 °C gemessen, sofern nicht ausdrücklich etwas anderes angegeben wird. Die optischen Daten wurden bei 20 °C gemessen, sofern nicht ausdrücklich etwas anderes angegeben wird.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Rest $C_nH_{2n+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Sübstituenten $R^1$, $R^2$, $L^1$ und $L^2$:

| Code für $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nF | $C_nH_{2n+1}$ | F | H | H |
| nOF | $OC_nH_{2n+1}$ | F | H | H |
| nCl | $C_nH_{2n+1}$ | Cl | H | H |
| nF.F | $C_nH_{2n+1}$ | F | H | F |
| nOmFF | $C_nH_{2n+1}$ | $OC_mH_{2m+1}$ | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_2$ | $C_nH_{2n+1}$ | $OCHF_2$ | H | H |
| nS | $C_nH_{2n+1}$ | NCS | H | H |
| rVsN | $C_rH_{2r+1}$-CH = CH-$C_sH_{2s}$- | CN | H | H |
| rEsN | $C_rH_{2r}$ + 1-O-$C_sH_{2s}$- | CN | H | H |
| nNF | $C_nH_{2n+1}$ | CN | F | H |
| nAm | $C_nH_{2n+1}$ | $COOC_mH_{2m+1}$ | H | H |

<u>**Tabelle A:**</u>

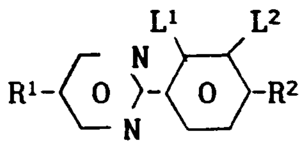

PYP

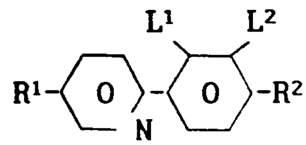

PYRP

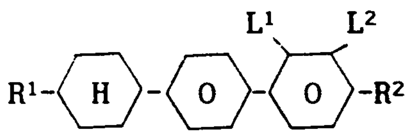

BCH

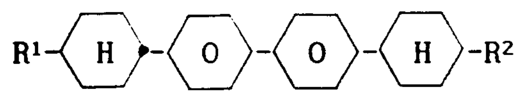

CBC

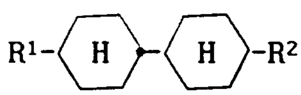

CCH

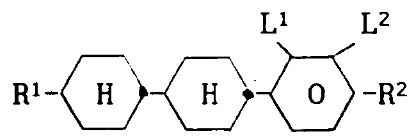

CCP

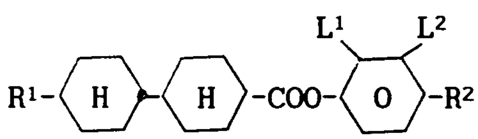

CP

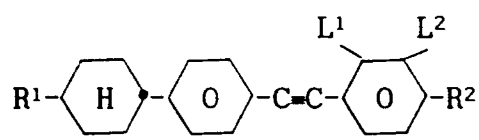

CPTP

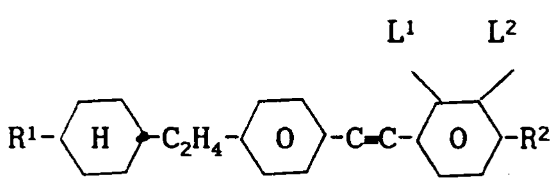

CEPTP

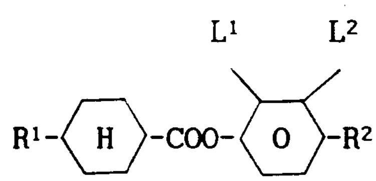

D

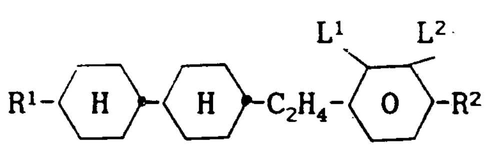

ECCP

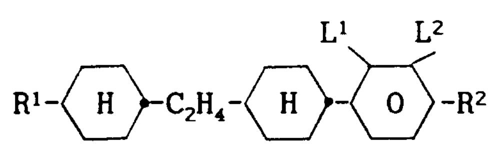

CECP

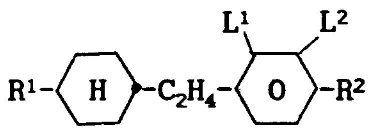

EPCH

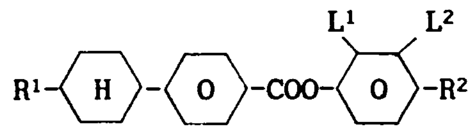

HP

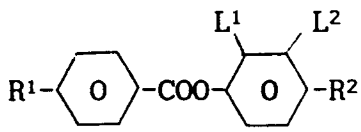

ME

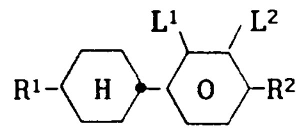

PCH

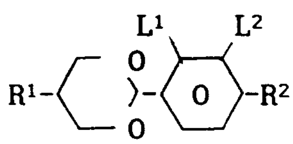

PDX

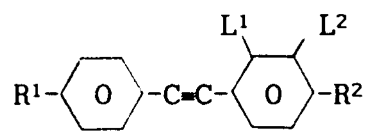

PTP

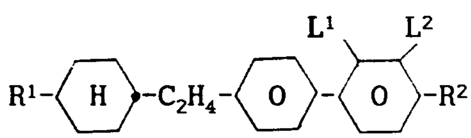

BECH

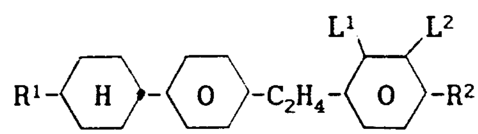

EBCH

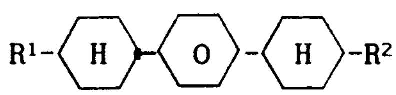

CPC

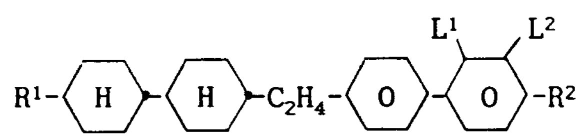

CCEB

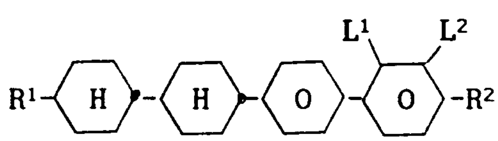

CCB

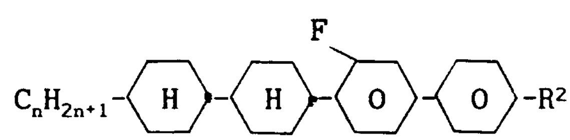

CCB-n.FX

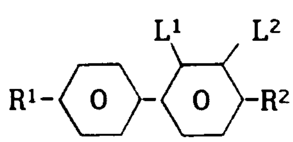

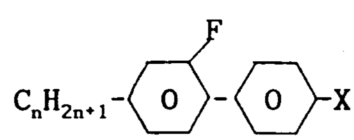

B-n.FX

**Tabelle B:**

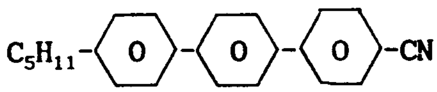

T15

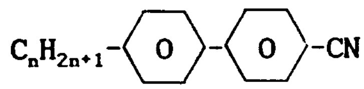

K3n

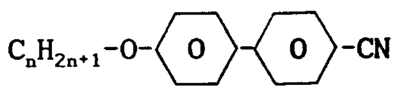

M3n

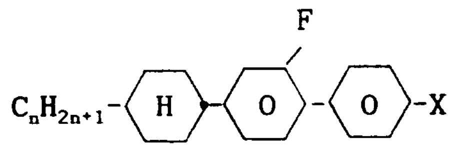

BCH-n.FX

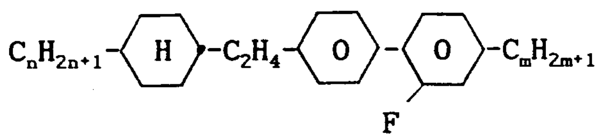

Inm

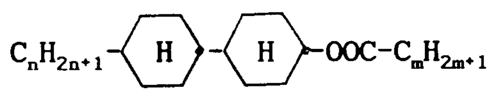

C-nm

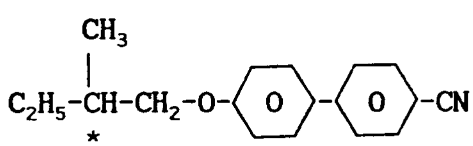

C15

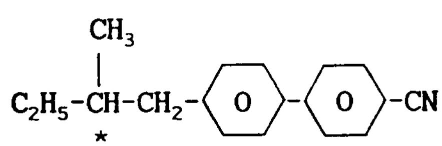

CB15

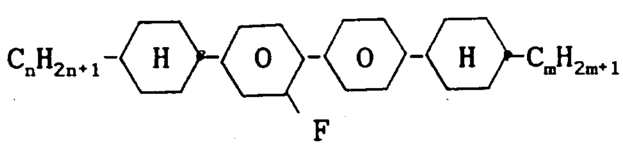

CBC-nmF

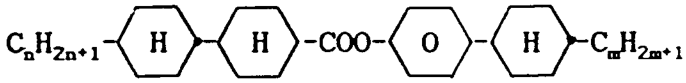

CCPC-nm

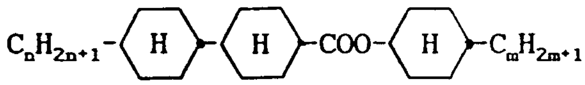

CH-nm

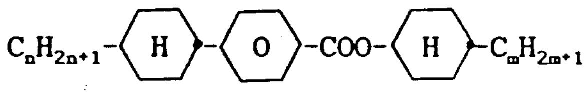

HD-nm

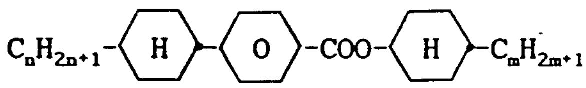

HH-nm

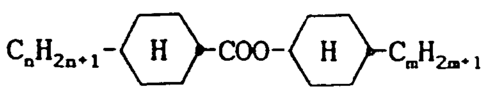

OS-nm

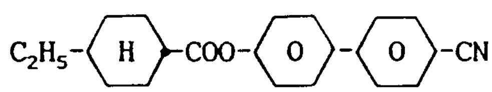

CHE

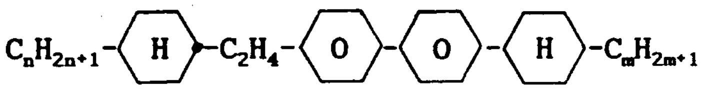

ECBC-nm

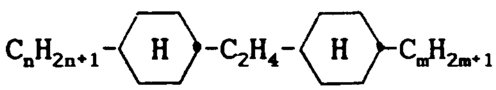

ECCH-nm

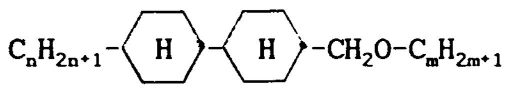

CCH-n1Em

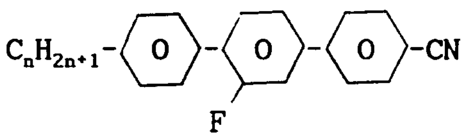

T-nFn

Beispiel 1

| Komponente | Gew.% | | |
|---|---|---|---|
| PCH-3 | 12,0 | S → N [°C] | < -20 |
| ME2N | 6,0 | Klärpunkt [°C] | +68 |
| ME3N | 5,0 | $\Delta\epsilon$ | +45,7 |
| ME2N.F | 6,0 | $\Delta n$ | 0,1682 |
| ME3N.F | 7,0 | $V_{10,0,20}$ : | 0,72 V |
| ME4N.F | 12,0 | | |
| ME5N.F | 15,0 | | |
| PCH-301 | 8,0 | | |
| T15 | 3,0 | | |
| HP-3N.F | 9,0 | | |
| HP-4N.F | 9,0 | | |
| HP-5N.F | 8,0 | | |

Beispiel 2

| Komponente | Gew.% | | |
|---|---|---|---|
| PCH-3 | 10,0 | S → N [°C] | < -20 |
| ME2N | 6,0 | Klärpunkt [°C] | +67 |
| ME3N | 5,0 | Δε | +51,5 |
| ME2N.F | 9,0 | Δn | 0,1869 |
| ME3N.F | 10,0 | $V_{10,0,20}$ : | 0,69 V |
| ME4N.F | 15,0 | | |
| ME5N.F | 15,0 | | |
| T15 | 6,0 | | |
| HP-3N.F | 7,0 | | |
| HP-4N.F | 7,0 | | |
| HP-5N.F | 6,0 | | |
| PTP-102 | 2,0 | | |
| PTP-201 | 2,0 | | |

Beispiel 3

| Komponente | Gew.% | | |
|---|---|---|---|
| PCH-3 | 11,0 | S → N [°C] | < -20 |
| ME2N | 6,0 | Klärpunkt [°C] | +68 |
| ME3N | 5,0 | Δε | +48,6 |
| ME2N.F | 7,5 | Δn | 0,1776 |
| ME3N.F | 8,5 | $V_{10,0,20}$ : | 0,71 V |
| ME4N.F | 13,5 | | |
| ME5N.F | 15,0 | | |
| PCH-301 | 4,0 | | |
| T15 | 4,5 | | |
| HP-3N.F | 8,0 | | |
| HP-4N.F | 7,5 | | |
| HP-5N.F | 7,0 | | |
| PTP-102 | 1,0 | | |
| PTP-201 | 1,0 | | |

**Patentansprüche**

**1.** Flüssigkristallanzeige auf der Basis einer verdrillten nematischen Zelle, wobei die Schichtdicke des flüssigkristallinen Mediums 3-10 µm und die optische Anisotropie > 0,15 ist, und das flüssigkristalline Medium eine Komponente A bestehend aus einer oder mehreren Verbindungen mit einer dielektrischen Anisotropie von über +30, und eine Komponente B bestehend aus einer oder mehreren Verbindungen mit einer optischen Anisotropie von mehr als 0,20, und eine Komponente C bestehend aus einer oder mehreren dielektrisch neutralen Komponenten enthält, dadurch gekennzeichnet, daß

a) Komponente A mindestens eine Verbindung ausgewählt aus der Formel $A^1$ enthält,

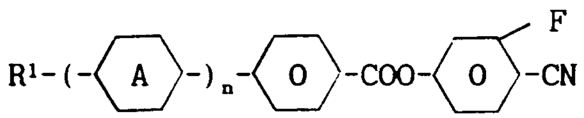

A1

worin

$R^1$ Alkyl, Alkenyl, Alkoxy oder Oxaalkyl mit bis zu, 8 C-Atomen,

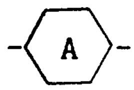

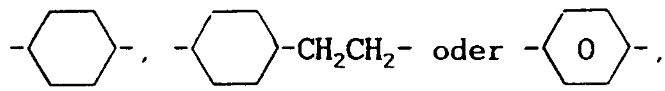

und oder

und

n 0 oder 1

bedeuten,

b) Komponente B mindestens eine Verbindung der Formel B1 enthält,

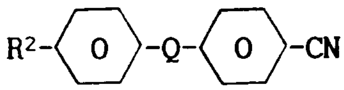

B1

worin

$R^2$ Alkyl, Alkenyl, Alkoxy, Alkenyloxy oder Oxaalkyl mit bis zu 8 C-Atomen,

Q

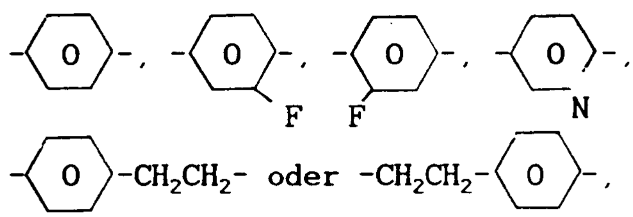

oder

und

m 0 oder 1

bedeuten, und

c) Komponente C mindestens eine Verbindung der Formel C1 enthält,

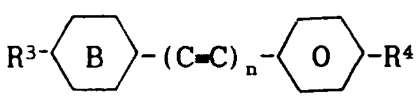

C1

worin

$R^3$ und $R^4$ jeweils unabhängig voneinander Alkyl, Alkenyl, Alkoxy, Alkenyloxy oder Oxaalkyl mit bis zu 8 C-Atomen,

$R^4$ auch F,

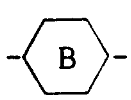

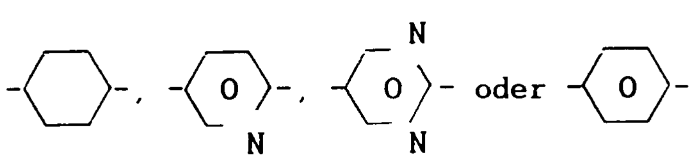

oder

und

n 0 oder 1

bedeuten.

**2.** Flüssigkristallanzeige nach Anspruch 1, dadurch gekennzeichnet, daß die Komponente A 40-80 Gew.% mindestens einer Verbindung der Formel A1 enthält.

**3.** Flüssigkristallanzeige nach Anspruch 1 oder 2, dadurch gekennzeichnet, daß das flüssigkristalline Medium
 a) 50-70 Gew.% der Komponente A,
 b) 2-15 Gew.% der Komponente B, und
 c) 2-15 Gew.% der Komponente C
enthält.

**4.** Flüssigkristallanzeige nach Anspruch 3, dadurch gekennzeichnet, daß das flüssigkristalline Medium 15-50 Gew.% mindestens einer weiteren nematischen oder nematogenen Komponente D enthält.

**5.** Flüssigkristallanzeige nach Anspruch 4, dadurch gekennzeichnet, daß die Komponente D mindestens eine Verbindung der Formel D1 enthält,

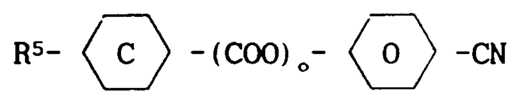 D1

worin
$R^4$ Alkyl, Alkoxy, Alkenyl, Alkenyloxy oder Oxaalkyl mit bis zu 8 C-Atomen,

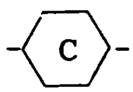 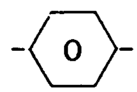, 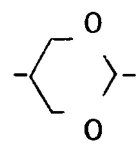, 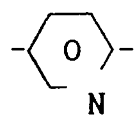, 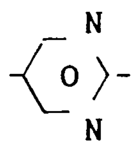 oder 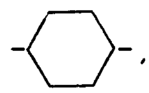,

und
n 0 oder 1
bedeuten.

**6.** Flüssigkristallanzeige nach Anspruch 5, dadurch gekennzeichnet, daß die Komponente D mindestens eine Verbindung der Formel D2 und mindestens eine Verbindung der Formel D3 enthält

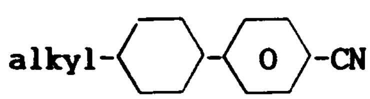 D2

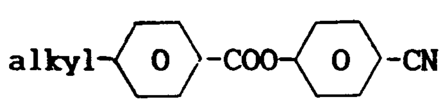 D3.

worin alkyl eine Alkylgruppe mit 1 bis 8 C-Atomen bedeutet.

**Claims**

**1.** The invention relates to a liquid-crystal display based on a twisted nematic cell, where the layer thickness of the liquid-crystalline medium is 3-10 µm and the optical anisotropy is > 0.15, and the liquid-crystalline medium contains a component A comprising one or more compounds having a dielectric anisotropy of greater than +30, a component B comprising one or more compounds having an optical anisotropy of greater than 0.20, and a component C comprising one or more dielectrically neutral components, characterized in that

a) component A contains at least one compound selected from the formula $A^1$

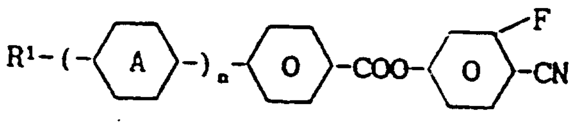

$A^1$

in which

$R^1$ is alkyl, alkenyl, alkoxy or oxaalkyl having up to 8 carbon atoms,

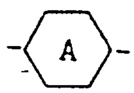 is 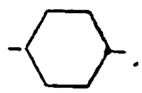 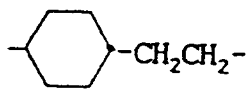 or 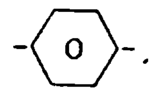

and

n is 0 or 1,

b) component B contains at least one compound of the formula $B^1$

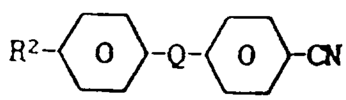

$B^1$

in which

$R^2$ is alkyl, alkenyl, alkoxy, alkenyloxy or oxaalkyl having up to 8 carbon atoms,

Q is

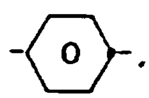 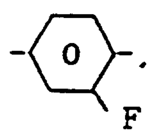 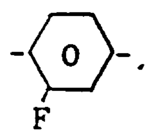 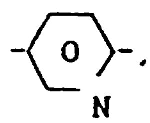

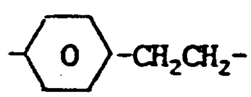 or 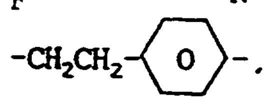

and

m is 0 or 1,

and

c) component C contains at least one compound of the formula $C^1$

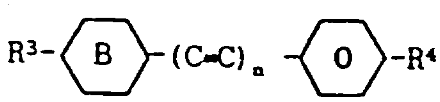

$C^1$

in which

$R^3$ and $R^4$ are each, independently of one another, alkyl, alkenyl, alkoxy, alkenyloxy or oxaalkyl having up to 8 carbon atoms,

$R^4$ is alternatively F,

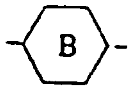 is 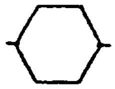 , 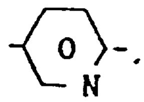 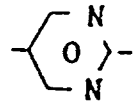 or 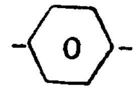

and

n is 0 or 1.

**2.** Liquid-crystal display according to Claim 1, characterized in that component A contains 40-80% by weight of at least one compound of the formula A1.

**3.** Liquid-crystal display according to Claim 1 or 2, characterized in that the liquid-crystalline medium contains

a) 50-70% by weight of component A,
b) 2-15% by weight of component B and
c) 2-15% by weight of component C.

**4.** Liquid-crystal display according to Claim 3, characterized in that the liquid-crystalline medium contains 15-50% by weight of at least one further nematic or nematogeneic component D.

**5.** Liquid-crystal display according to Claim 4, characterized in that component D contains at least one compound of the formula D1

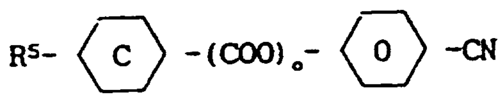 D1

in which

$R^4$ is alkyl, alkoxy, alkenyl, alkenyloxy or oxaalkyl having up to 8 carbon atoms,

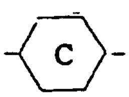 is 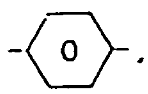 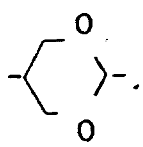 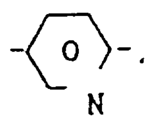 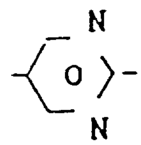 or 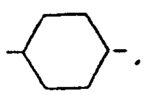

and

n is 0 or 1.

**6.** Liquid-crystal display according to Claim 5, characterized in that component D contains at least one compound of the formula D2 and at least one compound of the formula D3

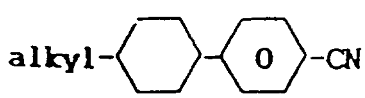 D2

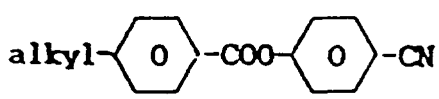 D3.

in which alkyl is an alkyl group having 1 to 8 carbon atoms.

## Revendications

**1.** Affichage à cristaux liquides a base d'une cellule nématique torsadée, où l'épaisseur de couche du milieu à cristaux liquides est de 3-10 µm et l'anisotropie optique est > 0,15 , et le milieu à cristaux liquides contient un Composant A constitue d'un ou plusieurs composés ayant une anisotropie diélectrique supérieure à +30, un Composant B constitué d'un ou plusieurs composés ayant une anisotropie optique supérieure à 0,20 , et un Composant C constitué d'un ou plusieurs composants diélectriquement neutres, caractérisé en ce que

a) le composant A contient au moins un composé choisi dans la formule $A^1$,

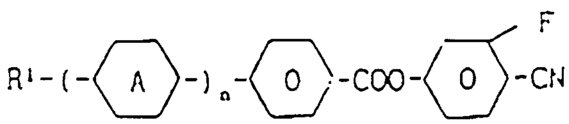

A1

dans laquelle

$R^1$ représente un alkyle, alcényle, alcoxy ou oxaalkyle ayant jusqu'à 8 atomes ce carbone,

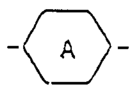 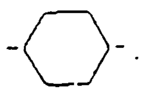 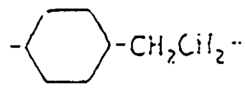 ou 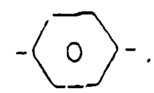

et

n vaut 0 ou 1,

b) le composant B contient au moins un composé de formule B1,

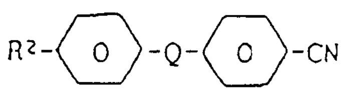

B1

dans laquelle

$R^2$ représente un alkyle, alcényle, alcoxy, alcényloxy ou oxaalkyle ayant jusqu'à 8 atomes de carbone, Q représente

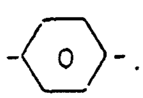 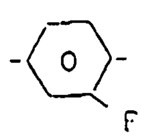 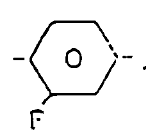 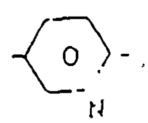

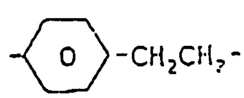 ou 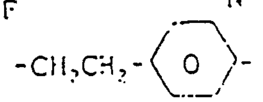

et

m vaut 0 ou 1,

et

c) le composant C contient au moins un composé de formule C1,

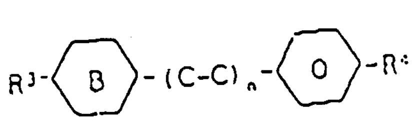

C1

dans laquelle

$R^3$ et $R^4$ chacun indépendamment l'un de l'autre représentent un alkyle, alcényle, alcoxy, alcényloxy ou oxaalkyle ayant jusqu'à 8 atomes de carbone, $R^4$ représente aussi F,

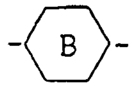
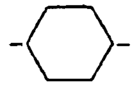,
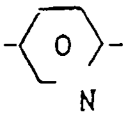,
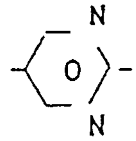
ou
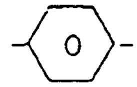

et,

n représente 0 ou 1.

2. Affichage à cristaux liquides selon la revendication 1, caractérisé en ce que le composant A contient 40-80% en poids d'au moins un composé de formule A1.

3. Affichage à cristaux liquides selon la revendication 1 ou 2, caractérisé en ce que le milieu à cristaux liquides contient :
   a) 50-70% en poids du composant A,
   b) 2-15% en poids du composant B, et
   c) 2-15% en poids du composant C.

4. Affichage à cristaux liquides selon la revendication 3, caractérisé en ce que le milieu à cristaux liquides contient 15-50% en poids d'au moins un autre composant D nématique ou nématogène.

5. Affichage à cristaux liquides selon la revendication 4, caractérisé en ce que le composant D contient au moins un composé de formule D1,

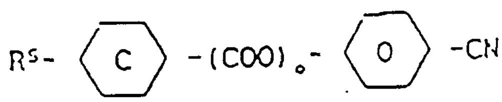
D1

dans laquelle

$R^4$ représente un alkyle, alcoxy, alcényle, alcényloxy ou oxaalkyle ayant jusqu'à 8 atomes de carbone,

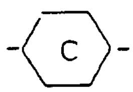
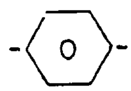,
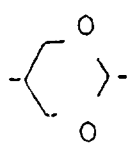,
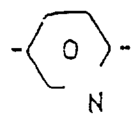,
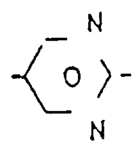

ou

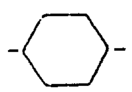,

et

n vaut 0 ou 1.

6. Affichage à cristaux liquides selon la revendication 5, caractérisé en ce que le composant D contient au moins un composé de formule D2 et au moins un composé de formule D3.

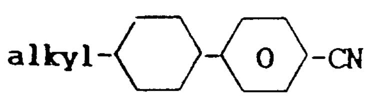
D2

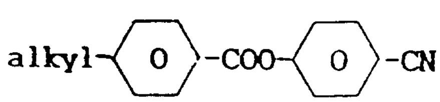
D3.

dans laquelle alkyle représents une groupe d'alkyle avec 1 -8 atoms